# EUROPEAN PATENT SPECIFICATION

(11) **EP 3 808 231 B1**
(45) Date of publication and mention of the grant of the patent: **14.09.2022**
(21) Application number: 20201259.7
(22) Date of filing: 12.10.2020
(51) Int. Cl.: A47J 31/44, A47J 31/46

(54) **STEAM DISPENSING APPARATUS FOR HOT BEVERAGE PREPARATION**
DAMPFVORRICHTUNG FÜR DIE ZUBEREITUNG VON HEISSEN GETRÄNKEN
APPAREIL DE DISTRIBUTION DE VAPEUR POUR LA PRÉPARATION DE BOISSONS CHAUDES

(30) Priority: 17.10.2019 IT 201900019199
(43) Date of publication of application: 21.04.2021
(73) Proprietor: Gruppo Cimbali S.p.A., 20082 Binasco (MI) (IT)
(72) Inventor: Granata, Michele, 20082 Binasco (MI) (IT); Baron Saiz, Claudia, 20082 Binasco (MI) (IT); Luigi, Morello, 20082 Binasco (MI) (IT)
(74) Representative: Perani & Partners S.p.A.

(56) References cited:
- EP-A1- 2 263 502
- EP-A1- 3 403 548
- WO-A1-2015/063742
- US-A1- 2017 332 825

## Description

The present invention relates to a steam dispensing apparatus for preparing hot beverages, having a device for prior drainage of the condensation water formed in the steam conduit, upstream from the valve, during a valve closing time elapsed from a previous steam dispensing operation.

As is known, for example, espresso machines for bars, restaurants and similar facilities, are normally equipped with a boiler for steam generation and a wand for dispensing steam into a container. Conventionally, the steam dispensed by the wand is used for heating and/or frothing the milk intended for preparation of the beverage universally known as "cappuccino".

More in detail, the boiler comprises an outlet connected via a delivery conduit to a dispensing valve, and in turn, to the steam wand.

Since a certain time period elapses between one steam dispensing operation and another, it will be actually found that, despite the provision of a suitable insulation, the decrease of temperature in the steam delivery conduit, in the section between the outlet of the boiler and the dispensing valve, causes condensation of steam in such section of the conduit. This causes the formation of condensation liquid which, depending on the size and length of the section of the conduit, as well as of its insulation conditions and the time elapsed from the last steam dispensing operation, can reach and exceed an amount of 10 or 12 grams.

Such condensation liquid, if not removed from the conduit in which it is formed, as steam is being dispensed for heating milk by the steam wand, eventually pours into the heated milk and, given its lower density relative to milk, remains on its surface, thereby causing an unpleasant sensation in the consumer.

In the prior art, attempts have been made to solve the issue of condensation liquid in the steam delivery conduit by various arrangements.

One of these attempts consists in improving the efficiency of the thermal insulation in the section of the conduit which delivers steam to the valve, as disclosed for example in US 20170332825 A1.

A different prior art solution consists in providing a heating element in the section of the conduit where condensation may occur, which is always on between one steam dispensing operation and the other, as disclosed for example in US 20170332832 A1.

These are generally highly expensive and poorly efficient arrangements.

Another prior art alternative consists in removing the condensation liquid formed upstream from the dispensing valve by simply opening the latter and keeping it open for a short period of time, before introducing the steam wand into the fluid to be heated.

Nevertheless, a drawback is noted with this method of operation, in that the condensation liquid is freely drained onto the cup holder of the machine, with the generation of hot water and steam and possible soiling of the countertop. The document EP 3 403 548 discloses an example of a steam dispensing apparatus.

Therefore, one of the objects of the present invention is to eliminate the condensation water generated in the section of the steam delivery conduit upstream from the dispensing valve, by equipping the latter with a device that can be actuated by the dispensing valve itself, and that can channel the condensation water toward a collection and discharge conduit while causing dispensing of pure steam into the steam wand by an additional operation on the valve.

A further object of the invention is to be able to supply to the beverage heating wand at least one predetermined steam flow, preferably a plurality different steam flows, as determined from preset positions of the control member for opening/closing the valve, to automatically adapt the steam flow according to the type of heating to be provided, which affords positive energy savings as compared to uncontrolled dispensing, like in the use of a conventional valve.

These and other objects, as better explained hereafter, are fulfilled by a steam dispensing apparatus for preparing hot beverages that has the characterizing features as set forth in the accompanying claim 1.

The invention will be now described in greater detail with reference to one embodiment thereof, given by way of illustration and without limitation, and shown in the annexed drawings, in which:
- Figure 1 shows a schematic view of certain elements of a steam dispensing apparatus for preparing hot beverages according to the present invention;
- Figure 2 shows an exploded perspective view of a longitudinal section of the valve;
- Figure 3 shows a longitudinal section of the steam dispensing valve, with the condensation water drain device in its standby position;
- Figure 4 shows a longitudinal section of the steam dispensing valve, with the condensation water drain device in the drain position;
- Figure 5 shows a longitudinal section of the steam dispensing valve, with the condensation water drain device in the steam dispensing position, with a predetermined flow value;
- Figure 6 shows a schematic view of the operational engagement between the control lever for controlling the rod of the valve and the end of said rod;
- Figure 7 shows an exploded perspective view of the steam flow regulating body of the valve and its annular member for adjusting the axial opening of the steam delivery slits.

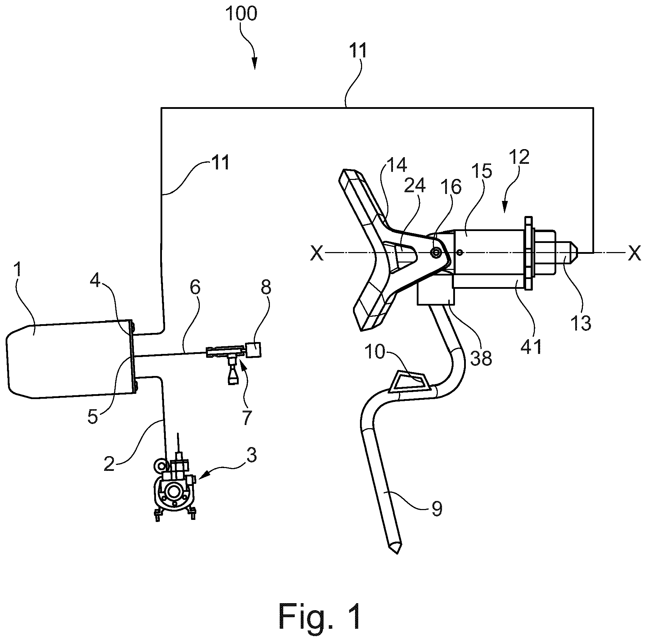

Referring to Figure 1, the general characteristics of a steam dispensing apparatus 100 for preparing hot beverages, preferably for heating and/or frothing milk, according to the present invention are shown.

The apparatus 100 may be either provided as a stand-alone apparatus or integrated in a machine for preparing hot beverages, e.g. coffee, espresso, cappuccino, tea and the like.

The apparatus 100 comprises a boiler 1 configured to generate steam, a water reservoir (not shown in the annexed figures) and a feed pump 3. This feed pump 3 is configured to draw water from the reservoir and to feed it to the boiler 1 via an inlet conduit 2. In the steady state, under normal working conditions, the boiler 1 uses the water fed into the inlet conduit 2 to generate a mixture of hot water and steam at an equilibrium temperature of about 120°C.

The boiler 1 comprises a first outlet 4, which is configured to only intercept the vapor phase of the mixture.

The boiler 1 also comprises a second outlet 5, which is configured to only intercept the hot water phase of the mixture, which may be delivered via a conduit 6 to a conventional valve 7, controlled by the angular displacements of a knob 8.

The apparatus 100 further comprises a wand 9 for introducing steam into the liquid to be heated. Preferably, such wand 9 consists of a tubular barrel designed to be immersed into the liquid, for example milk, contained in a container. By introducing steam into the milk, the wand 9 can heat and/or froth it in a conventional manner. Still preferably, such wand 9 has a thermally insulated operating handle 10, which facilitates control and manipulation thereof.

The apparatus 100 further comprises a steam delivery conduit 11 connected to the first outlet 4 of the boiler and configured to deliver the steam to the wand 9.

The conduit 11 is connected to a valve 12 at the connection 13 thereof.

In addition to being used for steam dispensing, the valve 12 also comprises means for prior drainage of the condensation water formed in the steam delivery conduit 11, as well as in the valve itself 12, during the time the latter has been closed since a previous dispensing operation.

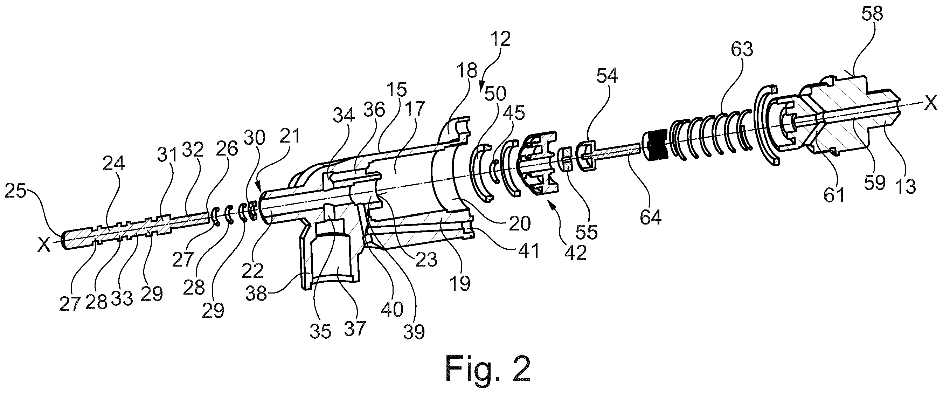

Steam is dispensed by controlling a lever 14 which is fixed to the exterior of the cylindrical body 15 of the valve 12 via a pin 16, whereby the lever 14 may be angularly displaced by an operator through various positions, as further described below. Particularly referring to Figure 2, the valve 12 comprises the aforementioned cylindrical body 15 having the inner cylindrical cavity 17 and longitudinally extending along an axis referenced X-X.

The hollow body 15 also has a flange 18 for connection to a support member, not shown, which is placed around the end 19 having a first opening 20 formed therein. The support member may form part of a support frame of the apparatus 100 or a frame of a machine for preparing hot beverages, such as coffee, in which the apparatus 100 is incorporated.

At the end that is axially opposite to the opening 20, the hollow body 15 has a second opening 21, which provides access to a cylindrical axial cavity 22. The latter terminates with the end 23, which is located inside the cylindrical cavity 17.

The axial cavity 22 has a cylindrical rod 24 positioned therein, which is susceptible of axially moving along the axis X-X. The first end 25 of the rod 24 is designed to remain outside the cavity 22, to cooperate with the control lever 14 for controlling the valve 12, as further described below, whereas the second end 26 is designed to reach into the cylindrical cavity 17.

The hydraulic seal between the rod 24 and the inner wall of the axial cavity 22 is provided by the O-rings 27, 28, 29 and 30, this latter being placed against the abutment 31 from which the final section 32 of the rod 24 extends.

An annular groove 33 is provided on such rod 24, between the location of the O-ring 28 and the location of the O-ring 29 and, as further explained below, when the rod 24 is placed within the axial cavity 22, the sections 34 and 35 of the steam delivery pipe 36 open out therein, when the valve 12 is controlled to perform the aforementioned task.

Thus, the sections 34 and 35 open into the cavity 37 of the connection 38 whereat the wand 9 of the apparatus 100 is connected.

A first section 40 of the conduit 41 for draining condensate formed in the valve 12 and in the conduit 11, upstream therefrom, radially extends at the end portion 39 on the side of the end 23 of the axial conduit 22, for draining it also remote the area in which the valve 12 operates.

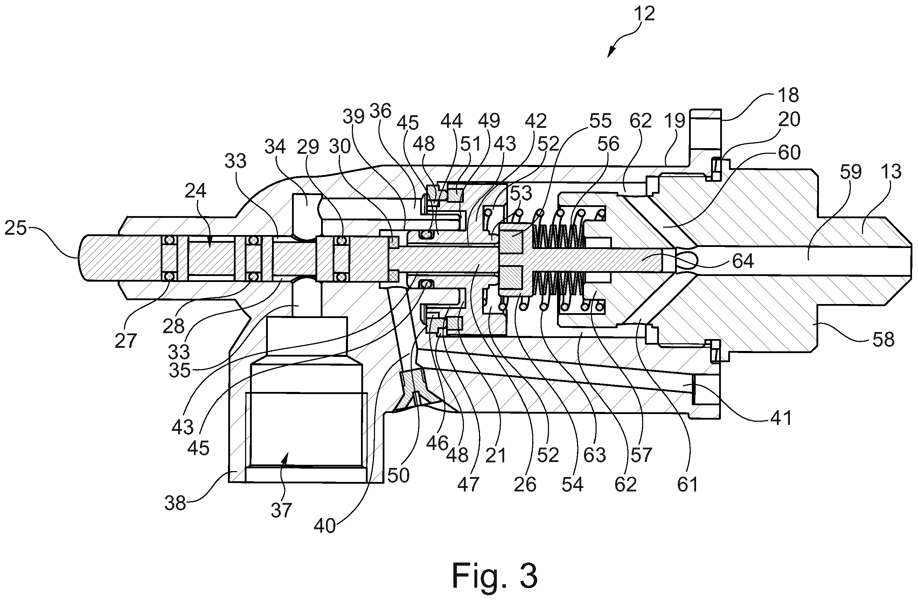

Referring to Figures 3, 4 and 5, in combination with Figure 2, a cylindrical element, generally referenced 42, is shown inside the cavity 17 of the cylindrical body 15, which acts as a flow regulator.

This cylindrical element 42 has a central through hole 43 and a first axial sleeve 44 that faces the end portion 39 of the axial cavity 22, in which said sleeve fits through an opening 23 of such axial cavity 22 with the interposition of an O-ring 45.

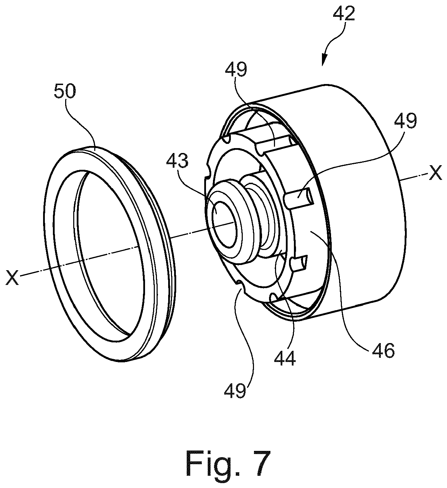

Such cylindrical element 42, as shown in the exploded perspective view of Figure 7, in the outer cylindrical surface 46 of the collar portion 47, arranged around the axial sleeve 44, with the formation of an annular recess 48, has a plurality of flutes 49 formed on such outer surface 46.

These flutes can be formed in the form of axial grooves or may be designed as a helical groove.

An annular element 50 is concentrically radially fitted to the inner wall of the cavity 17, on the portion 47 in the form of a collar. As the cylindrical element 42 is displaced, parallel to the axis X-X, relative to the said annular element 50, the opening of the said flutes 49 is entirely or partially exposed.

An additional O-ring 51 is placed between the annular element 50 and the cylindrical element 42.

The cylindrical element 42 has an annular cavity 52 on the face opposite the one in which the first axial sleeve 44 is formed, and a second axial sleeve 53 extends from the center of the annular cavity 52, with a central hole that extends in line the axial hole 43 of the opposite sleeve 44.

Such second axial sleeve 53 has the piston head 54, with a gasket 55, frontally engaged thereagainst and biased by a pack 56 of elastic members, such as Belleville washers, which acts against the end of a sleeve 57, that extends along the axis X-X, and is part of a body 58 that forms a plug for closing the cavity 17 of the cylindrical body 15. The aforementioned plug body 58, at its external end, is equipped with the connection 13 for the conduit 11 that carries the steam from the boiler 1.

A channel 59 is formed inside the connection 13 and the plug body 58, for carrying the steam that flows through radial channels 60, 61, and can thus reach the chamber 62 that is part of the cavity 17 of the cylindrical body 15.

The plug body 58 also forms an abutment for a helical spring, referenced 63, which engages in the annular cavity 52 of the body 42, and holds it against the annular element 50.

The piston head 54 is connected to the end of a control rod 64 which axially fits into the steam inlet conduit 59.

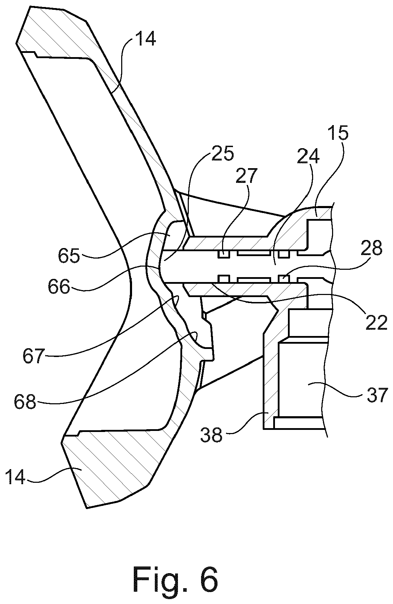

Referring to Figure 6, it may be noted that the lever 14 for controlling the valve 12, which is mounted to the cylindrical body 15 thereof via a pin 16, and may thus be angularly moved around such pin, has a recess 65 whose bottom is formed with a plurality of steps 66, 67, 68 having different depths in the body of the lever.

The control rod 24 for controlling the valve 12 extends inside the recess 65 and, according to the position of the lever 14, contacts with its end 25 one of the steps 66, 67, 68 of the bottom of the recess, each of which corresponds to a respective axial position of the control rod inside the channel 22 and hence to a respective operating mode of the valve.

For example, in the arrangement that is schematically shown in Figure 6, the position of the lever 14 that allows the end 25 of the rod 24 to reach against the deepest step 66, causes the rod 24, as shown in Figure 3 to be positioned with the piston head 54, with the gasket 55, biased by the pack of elastic members 56 against the flow regulating body 42, to thereby closing access to the axial passage 43 with the same flow regulating body 42 being biased by the spring 63 against the annular element 50 in the cavity 17, and blocking the connection with the channel 36 and hence with the further steam delivery channels 34, 35 and 37.

In these conditions the valve 12 is in the closed or standby position.

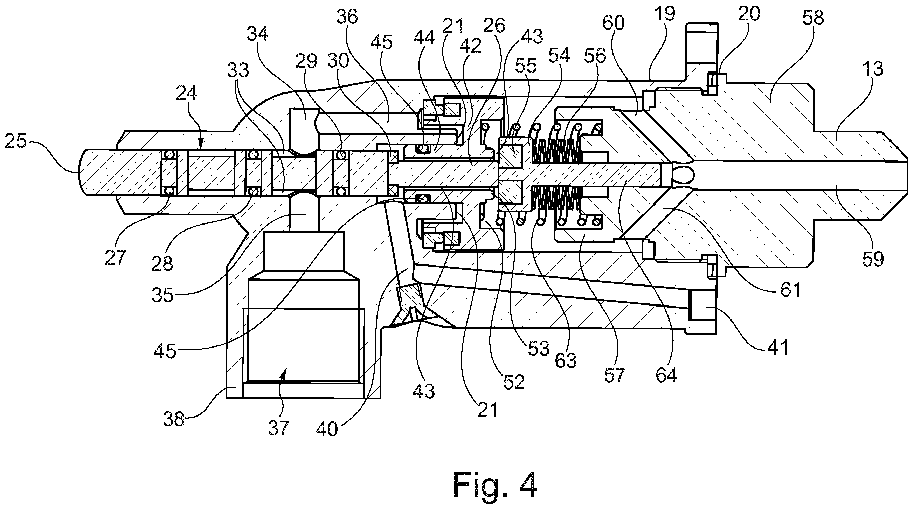

An angular displacement of the lever 14 moves the free end 25 of the rod 24 to the shallowest step 67 and leads to a different axial position of the rod 24, as shown for example in Figure 4, in which the end 26 of the rod 24 causes the piston head 55 to be only displaced, to overcome the bias of the pack of springs 56, and cause the axial passage 43 to be opened and the condensate formed in the cylindrical cavity 17 to be drained to the end section 39 of the axial conduit 22 , and eventually to the drain conduits 40, 41.

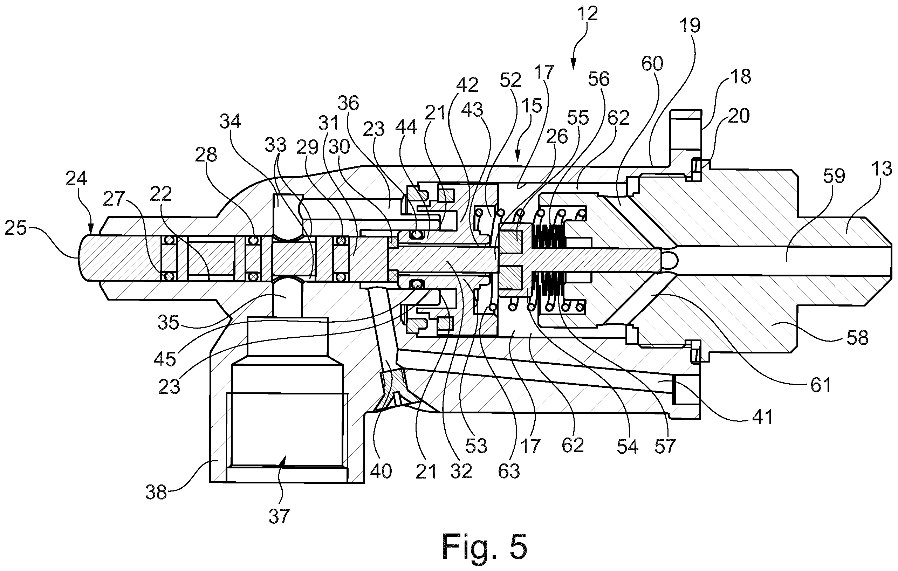

Any further angular displacement of the lever 14 causes the end 25 of the rod 24 to engage with the step 68, and to axially displace the rod 24 to the position as shown, for example, in Figure 5, in which the shoulder 30, with the O-ring 31, causes axial displacement of the flow regulating body 42, by frontally engaging with the first sleeve 44, and blocking the channel 43 to prevent the passage of steam to the condensate draining conduits 40, 41.

Such displacement causes partial or total exposure of the flutes 49 formed on the cylindrical surface 46, relative to the annular element 50.

These flutes allow the cylindrical chamber 17 to be only connected with the conduit 36 which allows the steam to reach the connection 38 connected to the wand 9, via the conduits 34, 35.

With all the other passages closed, the valve 12 will be only able to deliver steam at the maximum flow rate, assuming that the step 68 has such as depth as to allow the axial slits 49 to be entirely opened, by relative positioning of the rod 24.

Otherwise, by changing the number of steps of the bottom of the recess 66 and by changing their depth relative to the step 68, or namely reducing it, the different axial positioning of the control rod 24 will cause the axial slits 49 to be partially opened and a predetermined reduced delivery of the flow of steam to be established by the respective depth of the steps of the recess 66.

Therefore, with the apparatus of the invention, the condensate formed when the apparatus is idle may be drained from the valve 12, and different steam dispensing flows may be automatically established according to the type of heating to be provided, i.e. depending on the amount of liquid to be heated or frothed, if the liquid is milk, thereby affording power savings and cost effectiveness.

## Claims

1. A steam dispensing apparatus (100) for hot beverage preparation, the apparatus comprising:
- a boiler (1) configured to generate steam and comprising a first outlet (4);
- a steam wand (9) configured to introduce steam into a container;
- a steam delivery conduit (11) connected to the first outlet (4) of the boiler (1) and configured to deliver the steam to the wand (9);
further comprising a valve (12) for dispensing steam to the wand (9) and draining the condensation water formed in the valve (12) and in the steam delivery conduit (11) upstream from the valve (12), during the closing time of the valve (12) elapsed from a previous dispensing operation, said valve (12) being interposed between the wand (9) and the steam delivery conduit (11) and comprising:
- a predominantly longitudinal hollow body (15) extending along a longitudinal axis (X-X), said hollow body (15) comprising:
- an axial cavity (17), a steam inlet connection (13), located at one axial end of the hollow body (15), said inlet connection (13) being connected to said steam delivery conduit (11) to receive steam from the boiler (1) and deliver it into said cavity (17);
- a steam outlet connection (38), connected to said wand (9) for delivering steam to said wand (9);
- a condensation water drain connection (41);
- a rod (24), axially accommodated in a channel (22) having an opening (21) facing out of the valve (12) formed in said hollow body (15) and ending with an opening (26) that opens into said cavity (17), which is designed to perform axial movements in both directions along said longitudinal axis (X-X);
- a control lever (14) operably engaged with said rod (24) to accommodate said axial movements thereof under the bias of elastic members (56, 63) from a closed position, said rod (24) being adapted to create passages for establishing hydraulic communication between said inlet connection (13) and said drain connection (41), by a first axial movement of said rod (24), and to establish hydraulic communication between said inlet connection (13) and the outlet connection (38) in communication with said wand (9), in response to a second axial movement of the rod (24).

2. An apparatus (100) as claimed in claim 1, wherein:
- said cavity (17) of the hollow body (15) includes a cylindrical element (42) for adjusting the steam flow, said cylindrical element (42) having a central through hole (43) and a first axial sleeve (44) that faces the end portion (39) of said axial cavity (22), in which said first sleeve (44) fits through an opening (23) of said axial cavity (22) with the interposition of an O-ring (45).

3. An apparatus as claimed in claims 1 and 2, wherein said cylindrical element (42) has a collar portion (47) whose outer cylindrical surface (46) placed around said first axial sleeve (44), thereby forming an annular gap (48), is formed with a plurality of grooves (49) arranged thereon.

4. An apparatus as claimed in claim 3, **characterized in that** said cylindrical element (42) is operably connected to an annular element (50), concentrically disposed on the collar portion (47) which partially or entirely exposes the opening of said grooves (49) upon axial displacement of said cylindrical element (42) parallel to the axis X-X.

5. An apparatus as claimed in any of claims 1 to 4, **characterized in that** said cavity (17) of said hollow body (15) includes a piston head (54), having a seal (55) that rests against the opening of said axial through hole (43) of said cylindrical element (42), that faces the interior of said cavity (17), a rod (64), connected with one of its ends to said piston head (54) and axially accommodated in the steam delivery conduit (59) formed within a cap-like body (58), which is adapted to close said cavity (17) of said cylindrical body (15), a pack of elastic elements (56) being interposed between said piston head (54) and said cap-like body (58) to keep said piston head (54) adherent against the opening of said axial through hole (43) of said cylindrical element (42), facing the interior of said cavity (17).

6. An apparatus as claimed in any of claims 1 to 5, **characterized in that** said cavity (17) of said cylindrical body (15) comprises an elastic member (63) between said cylindrical element (42) for adjusting the steam flow and said cap-like body (58) for biasing said cylindrical element (42) against the opening (23) of the terminal portion (39) of said axial conduit (22) that faces said cavity (17).

7. An apparatus as claimed in any of claims 1 to 6, **characterized in that** said control lever (14), operably engaged with said rod (24) to accommodate the axial movements of the latter from a closed position, comprises a recess (65) whose bottom is formed with a plurality of steps (66, 67, 68) having different depths in the lever body, said control rod (24) for controlling the valve (12) having its end (25) in contact with one of the steps (66, 67, 68) of the bottom of the recess (65), according to the angular position assumed by the lever (14), each corresponding to a respective axial position of said control rod (24) in the channel (22) and hence to a respective operating mode of the valve (12).

## Patentansprüche

1. Dampfabgabevorrichtung (100) zur Zubereitung von Heißgetränken, wobei die Vorrichtung Folgendes umfasst:
- einen Kessel (1), der dazu konfiguriert ist, Dampf zu erzeugen und der einen ersten Auslass (4) umfasst;
- einen Dampfstab (9), der dazu konfiguriert ist, Dampf in einen Behälter einzuführen;
- eine Dampfzufuhrleitung (11), die mit dem ersten Auslass (4) des Kessels (1) verbunden und dazu konfiguriert ist, dem Stab (9) den Dampf zuzuführen;
die ferner ein Ventil (12) umfasst, um Dampf an den Stab (9) abzugeben und das Kondenswassers, das in dem Ventil (12) und in der Dampfzufuhrleitung (11) stromaufwärts des Ventils (12) gebildet wird, während der Schließzeit des Ventils (12), die seit einem vorherigen Abgabevorgang verstrichen ist, abzugeben, wobei das Ventil (12) zwischen dem Stab (9) und der Dampfzufuhrleitung (11) eingefügt ist und Folgendes umfasst:
- einen überwiegend länglichen Hohlkörper (15), der sich entlang einer Längsachse (X-X) erstreckt, wobei der Hohlkörper (15) Folgendes umfasst:
- einen axialen Hohlraum (17), einen Dampfeinlassanschluss (13), der sich an einem axialen Ende des Hohlkörpers (15) befindet, wobei der Einlassanschluss (13) mit der Dampfzufuhrleitung (11) verbunden ist, um Dampf von dem Kessel (1) zu empfangen und in den Hohlraum (17) abzugeben;
- einen Dampfauslassanschluss (38), der mit dem Stab (9) verbunden ist, um dem Stab (9) Dampf zuzuführen;
- einen Kondenswasserablaufanschluss (41);
- einen Stab (24), der axial in einem Kanal (22) untergebracht ist, der eine Öffnung (21) aufweist, die aus dem Ventil (12), das in dem Hohlkörper (15) gebildet ist, heraus gewandt ist und mit einer Öffnung (26) endet, die in den Hohlraum (17) mündet, der dazu ausgelegt ist, axiale Bewegungen in beiden Richtungen entlang der Längsachse (X-X) auszuführen;
- einen Steuerhebel (14), der mit dem Stab (24) in Wirkeingriff steht, um dessen axiale Bewegungen unter der Vorspannung elastischer Elemente (56, 63) aus einer geschlossenen Position unterzubringen, wobei der Stab (24) dazu angepasst ist, Durchgänge zum Herstellen einer hydraulischen Verbindung zwischen dem Einlassanschluss (13) und dem Ablassanschluss (41) durch eine erste axiale Bewegung des Stabes (24) anzulegen, und um eine hydraulische Verbindung zwischen dem Einlassanschluss (13) und dem Auslassanschluss (38) in Kommunikation mit dem Stab (9) als Reaktion auf eine zweite axiale Bewegung des Stabes (24) herzustellen.

2. Vorrichtung (100) nach Anspruch 1, wobei:
- der Hohlraum (17) des Hohlkörpers (15) ein zylindrisches Element (42) zum Einstellen des Dampfstroms beinhaltet, wobei das zylindrische Element (42) ein zentrales Durchgangsloch (43) und eine erste axiale Hülse (44) aufweist, die dem Endabschnitt (39) des axialen Hohlraums (22) zugewandt ist, wobei die erste Hülse (44) mit dem Einfügen eines O-Rings (45) durch eine Öffnung (23) des axialen Hohlraums (22) passt.

3. Vorrichtung nach den Ansprüchen 1 und 2, wobei das zylindrische Element (42) einen Bundabschnitt (47) aufweist, dessen äußere zylindrische Oberfläche (46) um die erste axiale Hülse (44) platziert ist, wodurch ein ringförmiger Spalt (48) mit einer Vielzahl von Nuten (49), die darauf eingerichtet sind, gebildet ist.

4. Vorrichtung nach Anspruch 3, **dadurch gekennzeichnet, dass** das zylindrische Element (42) mit einem ringförmigen Element (50) wirkverbunden ist, das konzentrisch auf dem Bundabschnitt (47) angeordnet ist, der die Öffnung der Nuten (49) bei axialer Verschiebung des zylindrischen Elements (42) parallel zu der Achse X-X teilweise oder vollständig freilegt.

5. Vorrichtung nach einem der Ansprüche 1 bis 4, **dadurch gekennzeichnet, dass** der Hohlraum (17) des Hohlkörpers (15) einen Kolbenkopf (54) beinhaltet, der eine Dichtung (55) aufweist, die an der Öffnung des axialen Durchgangslochs (43) des zylindrischen Elements (42) anliegt, das dem Inneren des Hohlraums (17) zugewandt ist, einen Stab (64), der mit einem seiner Enden mit dem Kolbenkopf (54) verbunden ist und axial in der Dampfzufuhrleitung (59) untergebracht ist, die in einem kappenartigen Körper (58) gebildet ist, der dazu angepasst ist, den Hohlraum (17) des zylindrischen Körpers (15) zu schließen, wobei ein Paket elastischer Elemente (56) zwischen dem Kolbenkopf (54) und dem kappenartigen Körper (58) angeordnet ist, um den Kolbenkopf (54) an der Öffnung des axialen Durchgangslochs (43) des zylindrischen Elements (42), das dem Inneren des Hohlraums (17) zugewandt ist, haftend zu halten.

6. Vorrichtung nach einem der Ansprüche 1 bis 5, **dadurch gekennzeichnet, dass** der Hohlraum (17) des zylindrischen Körpers (15) ein elastisches Element (63) zwischen dem zylindrischen Element (42) zum Einstellen des Dampfflusses und dem kappenartigen Körper (58) zum Vorspannen des zylindrischen Elements (42) gegen die Öffnung (23) des Endabschnitts (39) der axialen Leitung (22), die dem Hohlraum (17) zugewandt ist, umfasst.

7. Vorrichtung nach einem der Ansprüche 1 bis 6, **dadurch gekennzeichnet, dass** der Steuerhebel (14), der mit Stab (24) in Wirkeingriff steht, um die axialen Bewegungen des Letzteren aus einer geschlossenen Position unterzubringen, eine Vertiefung (65) umfasst, deren Boden mit einer Vielzahl von Stufen (66, 67, 68), die unterschiedliche Tiefen in dem Hebelkörper aufweisen, gebildet ist, wobei der Steuerstab (24) zum Steuern des Ventils (12) sein Ende (25) mit einer der Stufen (66, 67, 68) des Bodens der Vertiefung (65) gemäß der Winkelposition, die von dem Hebel (14) eingenommen wird, in Kontakt hat, wobei jede einer jeweiligen axialen Position des Steuerstabes (24) in dem Kanal (22) und somit einer jeweiligen Betriebsart des Ventils (12) entspricht.

## Revendications

1. Appareil de distribution de vapeur (100) pour la préparation de boissons chaudes, l'appareil comprenant :
- une chaudière (1) configurée pour générer de la vapeur et comprenant une première sortie (4) ;
- une buse de vapeur (9) configurée pour introduire de la vapeur dans un récipient ;
- un conduit d'acheminement de vapeur (11) relié à la première sortie (4) de la chaudière (1) et configuré pour fournir la vapeur à la buse (9) ;
comprenant en outre une soupape (12) pour distribuer de la vapeur à la buse (9) et drainer l'eau de condensation formée dans la soupape (12) et dans le conduit d'acheminement de vapeur (11) en amont de la soupape (12), pendant le temps de fermeture de la soupape (12) écoulé depuis une opération de distribution précédente, ladite soupape (12) étant interposée entre la buse (9) et le conduit d'acheminement de vapeur (11) et comprenant :
- un corps creux principalement longitudinal (15) s'étendant le long d'un axe longitudinal (X-X), ledit corps creux (15) comprenant :
- une cavité axiale (17), un raccord d'entrée de vapeur (13), situé au niveau d'une extrémité axiale du corps creux (15), ledit raccord d'entrée (13) étant relié audit conduit d'acheminement de vapeur (11) pour recevoir la vapeur de la chaudière (1) et la fournir dans ladite cavité (17) ;
- un raccord de sortie de vapeur (38), relié à ladite buse (9) pour fournir de la vapeur à ladite buse (9) ;
- un raccord de drainage d'eau de condensation (41) ;
- une tige (24), logée axialement dans un canal (22) ayant une ouverture (21) orientée à l'extérieur de la soupape (12) formée dans ledit corps creux (15) et se terminant par une ouverture (26) qui débouche dans ladite cavité (17), qui est conçue pour effectuer des mouvements axiaux dans les deux directions le long dudit axe longitudinal (X-X) ;
- un levier de commande (14) en prise fonctionnelle avec ladite tige (24) pour s'adapter auxdits mouvements axiaux de celle-ci sous la sollicitation d'éléments élastiques (56, 63) à partir d'une position fermée, ladite tige (24) étant apte à créer des passages pour établir une communication hydraulique entre ledit raccord d'entrée (13) et ledit raccord de drainage (41), par un premier mouvement axial de ladite tige (24), et pour établir une communication hydraulique entre ledit raccord d'entrée (13) et le raccord de sortie (38) en communication avec ladite buse (9), en réponse à un second mouvement axial de la tige (24).

2. Appareil (100) selon la revendication 1, dans lequel :
- ladite cavité (17) du corps creux (15) comprend un élément cylindrique (42) pour ajuster l'écoulement de vapeur, ledit élément cylindrique (42) ayant un trou traversant central (43) et un premier manchon axial (44) qui fait face à la partie d'extrémité (39) de ladite cavité axiale (22), dans lequel ledit premier manchon (44) s'adapte à travers une ouverture (23) de ladite cavité axiale (22) avec l'interposition d'un joint torique (45).

3. Appareil selon les revendications 1 et 2, dans lequel ledit élément cylindrique (42) a une partie de collerette (47) dont la surface cylindrique extérieure (46) placée autour dudit premier manchon axial (44), formant ainsi un espace annulaire (48), est formée avec une pluralité de rainures (49) disposées sur celle-ci.

4. Appareil selon la revendication 3, **caractérisé en ce que** ledit élément cylindrique (42) est relié de manière opérationnelle à un élément annulaire (50), disposé de manière concentrique sur la partie de collerette (47) qui expose partiellement ou entièrement l'ouverture desdites rainures (49) lors du déplacement axial dudit élément cylindrique (42) parallèlement à l'axe X-X.

5. Appareil selon l'une quelconque des revendications 1 à 4, **caractérisé en ce que** ladite cavité (17) dudit corps creux (15) comprend une tête de piston (54), ayant un joint d'étanchéité (55) qui repose contre l'ouverture dudit trou traversant axial (43) dudit élément cylindrique (42), qui est orientée vers la partie interne de ladite cavité (17), une tige (64), reliée par l'une de ses extrémités à ladite tête de piston (54) et logée axialement dans le conduit d'acheminement de vapeur (59) formé à l'intérieur d'un corps en forme de capuchon (58), qui est apte à fermer ladite cavité (17) dudit corps cylindrique (15), un paquet d'éléments élastiques (56) étant interposés entre ladite tête de piston (54) et ledit corps en forme de capuchon (58) pour maintenir ladite tête de piston (54) adhérente contre l'ouverture dudit trou traversant axial (43) dudit élément cylindrique (42), étant orientée vers la partie interne de ladite cavité (17).

6. Appareil selon l'une quelconque des revendications 1 à 5, **caractérisé en ce que** ladite cavité (17) dudit corps cylindrique (15) comprend un élément élastique (63) entre ledit élément cylindrique (42) pour ajuster l'écoulement de vapeur et ledit corps en forme de capuchon (58) pour solliciter ledit élément cylindrique (42) contre l'ouverture (23) de la partie terminale (39) dudit conduit axial (22) qui est orientée vers ladite cavité (17).

7. Appareil selon l'une quelconque des revendications 1 à 6, **caractérisé en ce que** ledit levier de commande (14), engagé de manière opérationnelle avec ladite tige (24) pour recevoir les mouvements axiaux de celle-ci à partir d'une position fermée, comprend un évidement (65) dont le fond est formé avec une pluralité de gradins (66, 67, 68) ayant différentes profondeurs dans le corps de levier, ladite tige de commande (24) pour commander la soupape (12) ayant son extrémité (25) en contact avec l'un des gradins (66, 67, 68) du fond de l'évidement (65), selon la position angulaire prise par le levier (14), chacun correspondant à une position axiale respective de ladite tige de commande (24) dans le canal (22) et donc à un mode de fonctionnement respectif de la soupape (12).
